# EUROPEAN PATENT SPECIFICATION

(11) **EP 3 515 035 B1**
(45) Date of publication and mention of the grant of the patent: **02.06.2021**
(21) Application number: 18153102.1
(22) Date of filing: 23.01.2018
(51) Int. Cl.: H04L 29/06, G06F 21/62, H04L 29/08

(54) **COMPUTER SYSTEM AND METHOD FOR CONTROLLING ACCESS TO DIGITAL DATA OF A DEVICE**
COMPUTERSYSTEM UND VERFAHREN ZUR STEUERUNG DES ZUGRIFFS AUF DIGITALE DATEN EINER VORRICHTUNG
SYSTÈME INFORMATIQUE ET PROCÉDÉ PERMETTANT DE CONTRÔLER L'ACCÈS À DES DONNÉES NUMÉRIQUES D'UN DISPOSITIF

(43) Date of publication of application: 24.07.2019
(73) Proprietor: ABB Schweiz AG, 5400 Baden (CH)
(72) Inventor: SCHULZ, Dirk, 67149 Meckenheim (DE)
(74) Representative: Bittner, Peter

(56) References cited:
- EP-A2- 1 895 740
- US-A1- 2011 277 017

## Description

### Technical Field

The present invention generally relates to digital access control, and in particular relates to methods, computer program products and systems for controlling access to data provided by devices of an automation system.

### Background

Devices of industrial systems (e.g., production plants, smart buildings, ventilation systems, etc.) are typically monitored and process controlled by automation systems. For example, process plant devices typically provide tens of thousands of signals which are relevant for monitoring the technical state and/or process control of the plant. Some devices provide data in a digital format which are of interest to operators (users) of the automation system or they may be relevant to particular computer system functions for further processing. The devices are typically connected via appropriate network technology (e.g., the Internet of Things (loT)).

Human users as well as components of respective computer systems (collectively referred to as requesters) may try to access the digital data provided by the automation devices (e.g., via the loT) for very different uses or purposes. From a security perspective, it can be advantageous to authorize access to the digital data only under predefined access conditions. Typically, access rights to data (reading and modifying) are tied to user accounts or user roles. Roles are a good abstraction from individual requesters, separating actual user management from assigning access rights. Typically, role based access approaches are used where access control lists define which roles are allowed to access certain data of certain devices. That is, on the data provider side (the device), these roles need to be related to individual data objects of the device. Data providers need to maintain information about these roles and follow updates of the roles. For example, for embedded devices, this is hardly feasible or not at all. As a consequence, only very simple role concepts are applied (if at all).

With ubiquitous connectivity and seamless access to devices and information, security becomes a key concern of the industrial loT. However, managing security, particularly access rights in large, distributed machine-to-machine (M2M) scenarios, comes at high effort. Towards flexible inter-network industrial loT systems, this approach is neither economically feasible nor secure. The concerns of exposing information and managing user roles are not sufficiently separated. EP 1 895 740 A2 discloses a method for accessing content located in a server with a client. The content is associated with metadata that is also provided to the client in order to ensure the good display and formatting of the data.

US 2011/277017 A1 discloses methods for simplifying access control administration and increasing manageability in enterprise environments by allowing permissions to be managed in terms of user job functions.

### Summary

There is therefore a need to provide improved means for authorizing access to digital data of a device which forms part of an industrial automation system. As used herein, a device forms part of an industrial automation system if the device is configurable and/or controllable by the automation system, and/or can be integrated for respective analytics applications. To solve this technical problem, system, computer implemented method and respective computer program product for authorizing access to the digital data of such a device in accordance with the independent claims are provided.

To get access to the digital data of the device, initially a corresponding access request is generated by a requester. The requester may be a human user (e.g., an operator of the industrial automation system or a service engineer) or it may be an application running on a computer system. Typically, such a requester has one or more requester properties. For example, a requester property can be an identifier of the requester (e.g., a user ID or an application/system ID). Examples of other requester properties which can be relevant in the context of authorizing access are so-called roles of the requester. Role Based Access Control (RBAC) concepts are well known in the field of access control. RBAC is a policy neutral access control mechanism defined around roles and privileges. Thereby, one or more roles are assigned to the requester. The assignment of roles occurs during the design phase of the security policy. Each role defines permissions to perform certain operations. It is to be noted that permissions can also be defined directly at the level of the identifier of the requester. Roles are commonly used to facilitate the administration of access rights but they are not necessarily to be used. In general, a requester always has at least one requester property (i.e., the identifier) but can have plurality of requester properties, such as for example, multiple roles assigned to the requester.

The request of the requester having one or more requester properties is then received via an appropriate interface by a computer system which handles the access control to the digital data. The computer system has an authorization check component which checks whether the received requester properties entitle the requester to get access to the requested digital data or whether the request is to be rejected because the received requester properties do not include all required permissions for the requested data.

A plurality of (predefined) annotations is stored for the digital data at a respective storage location. The annotations of the digital data of the device may be stored in a memory portion of the device itself or they may be stored on a remote storage location communicatively coupled with the device. For examples, the annotations may already be stored on the device by the manufacturer of the device. For legacy devices which do not have annotations stored on the devices such annotations may be stored remotely on a separate entity. Each annotation is an identifier for meta-data of the digital data characterizing the semantic meaning of the digital data in accordance with a semantic technical dictionary. Some standards are provided for particular device types by organizations, such as for example, DRIVECOM User Group e.V (www.drivecom.org) or PROFIBUS and PROFINET International (PI) (www.profibus.org) to standardize the exchange of data. Such standards may serve as a basis of corresponding semantic dictionaries. Such semantic dictionaries describe the digital data of devices for data exchange purposes between distributed components in a networked system from a user's point of view. Human users advantageously work with parameters which are detectable by names. For communication between devices, parameters are rather defined by number pairs (e.g. index, sub-index; slot, index). Such parameters are also standardized to a large extent. However, for machine-machine communication a global unique identifier (e.g., an address identifier) is sufficient. Many users accept and use this way of parameter representation and they know that the communication usually depends on the communication protocol or profile, i.e. handling differences occur. This typically results in a considerable engineering effort. Further, to define access rules at the level of data objects of the digital data of the devices forming part of the industrial automation system becomes a very error prone task when working with the standard communication parameters which have no semantic meanings perceptible by the cognitive abilities of human users. In other words, the semantic meaning of such communication parameters is not directly derivable by human users. There is therefore a strong need to improve data access control methods in that they become more robust and reliable. The use of annotations of the digital data with identifiers of such technical dictionaries having a semantic meaning for access control system designers reduces the probability of assigning wrong permissions for such data with regards to respective requesters. For example, the mapping of the digital data objects on a device to the respective meta data identifiers can be already provided by the producers of such devices or it may be automatically performed by using respective predefined mapping data structures.

The authorization check component accesses an access data structure in response to the request. The access data structure may be stored as a data structure in a memory of the computer system itself or it may be stored on a remote storage location or on the respective device being communicatively coupled with the computer system. Further, the access data structure stores associations between requester properties and the annotations of the digital data. In other words, the access data structure defines which of the requester properties should have permissions to access respective data objects of the device by storing associations between the requester properties (e.g., ID, roles) and the annotations of the respective data objects. One data object may have multiple annotations. This corresponds to describing the same data object with different identifiers from different semantic dictionaries. Different semantic dictionaries may be available from different standardization organizations. The access control design can then make a choice between such different standards or even use multiple standards for access control purposes. By moving the level for associating requester access properties with the digital data of the device to the semantic identifier (metadata) level the system becomes more robust and less error prone which finally improves the access security for device data.

In one example, a particular requester property (e.g., role) is associated with a particular annotation by a direct assignment of the requester property to the particular annotation. For example, a particular role (e.g., energy monitoring) is directly assigned to an annotation (identifier) of particular device data (e.g., an input current of a speed drive). The direct assignment indicates that the permissions of the particular role allow access to the digital data whose annotation is assigned to the particular role.

In a further example a predefined annotation relationship data structure defines relationships between annotations. A particular requester property is associated with a particular annotation by an assignment of the particular requester property to an annotation node of the annotation hierarchy which is a supra-node of the particular annotation. The annotation relationship data structure may define a hierarchy between annotations in that a first annotation can be a supra-node of a second annotation which is a subordinate node of the supra-node. In other words, in an annotation hierarchy, a first annotation can be related to a second annotation, such that the first annotation is higher-ranked than the second annotation. In terms of nodes, the first annotation would be represented by a first node that is a supra-node in respect to a second node being a sub-node. For example, the annotation relationship data structure can be an ontology which describes the input current and the voltage of the speed drive as semantic identifiers for the respective data objects at the same level of a hierarchy. A node "measurement values" of the ontology may be a supra-node (e.g., a parent node) for both annotations. However, the annotation relationship data structure may also define non-hierarchical relationships in ontologies which can be evaluated to derive a particular supra-node propagating the permissions of an associated requester property to one or more related annotation nodes. An example is the relationship of a voltage of the variable speed drive (VSD) to the currents or conductors it is based on (e.g., UL1N being the tension between L1 and neutral/N). Generally, if a role is assigned to such supra-node it is considered to be associated also with the related annotations corresponding to respective data objects (e.g., measured input current and voltage) and the permissions of the role are propagated to the annotations which relate to the respective supra-node. Other hierarchical structures (e.g., tree structures) may also be used to implement the annotation relationship data structure. In this embodiment, access control lists can be defined at aggregate levels of the annotations (semantic identifiers) which further reduces the risk of assigning wrong permissions at the data object level.

The authorization check component the compares at least one requester property of the requester with the requester properties associated with the annotations. If the at least one requester property is part of at least one association the requester is authorized to access the digital data represented by the at least one respective annotation which is associated with the at least one requester property. Access authorization is given in accordance with the permissions as defined by the at least one requester property. If the at least one requester property is not part of at least one association the request to access the digital data is denied by the authorization check component.

In one example, the access data structure further stores one or more rules. A particular rule defines an additional access constraint for a particular association and authorizing is executed in accordance with the additional access constraint. The one or more rules allow in a flexible manner to implement additional access constraints for particular pairs of annotations and requester properties. Some constraints may not be valid for a certain role under any circumstances but only with regards to the access to particular data objects by this role. Therefore, the role definition may become very complex (and as a consequence very error prone) when implementing all potential data object specific constraints at the role level. The additional rules in the access data structure allow to keep role definitions quite generic but define additional access restrictions for certain data objects at the level of associations. For example, a rule can define that a data object represented by a corresponding annotation can be accessed once every minute by a first role whereas a second role is only permitted to access the data once every hour. Such additional access constraints may define, for example, a limitation of the number of allowed accesses during a predefined time interval. Another example is a constraint defining one or more allowed access data types. For example, for a particular association the additional access constraint may define that only read access is allowed to the respective digital data although the associated requester property may also include a write permission. Another example is a constraint which defines one or more time intervals during the day during which access is allowed. Another example defines a maximum data quantity which is allowed to access during one or more predefined time intervals. Assigning such rules to the associations defined in the access data structure allows a highly granular data access control policy at the data object level while keeping the roles as requester properties relatively simple.

The associations as defined in the address data structure can be seen as representations of the potential use of respective digital data objects by the requester. Such potential use in industrial automation systems typically includes but is not limited to: sensing, actuation, control, monitoring, supervision, communication, data analysis, scheduling and/or planning, optimization, maintenance, ordering, control of the functional behavior of the system including configuration of the system, monitoring and analysis of the functional system state and conditions including energy monitoring and/or condition monitoring.

In one embodiment, a computer program product is provided for authorizing access to digital data of a device which forms part of an industrial automation system. The computer program product includes instructions that when loaded into a memory of a computing device and executed by at least one processor of the computing device cause the computing device to execute the steps of a computer-implemented method which is performed by the computer system as disclosed herein.

In one example, a computer implemented method is provided for authorizing access to digital data of a device which forms part of an industrial automation system. The method includes: receiving, from an requester with one or more requester access properties, a request to access the digital data on the device. In response to the request, accessing an access data structure, the access data structure storing a plurality of annotations for the digital data wherein each annotation is an identifier for meta-data of the digital data characterizing the semantic meaning of the digital data in accordance with a semantic technical dictionary, and further storing associations between requester properties and the annotations (A1 to An). Comparing at least one requester property of the requester with the requester properties associated with the annotations. If the at least one requester property is part of at least one association, authorizing the requester to access the digital data represented by the at least one respective annotation which is associated with the at least one requester property wherein authorizing is in accordance with permissions as defined by the at least one requester property.

In one example, authorizing is executed in accordance with an additional access constraint wherein the access data structure further stores one or more rules and a particular rule defines the additional access constraint for a particular association.

The invention is defined by a computer implemented method according to claim 1, a computer program according to claim 12 and a computer system according to claim 13. Further embodiments are set out in the dependent claims.

### Brief Description of the Drawings

FIG. 1 illustrates elements which interact to execute a method for authorizing access to digital data of a device according to an embodiment;
FIG. 1A shows a simplified block diagram of a computer system according to an embodiment;
FIG. 2 is a simplified flowchart of a computer-implemented method for authorizing access to digital data of a device which forms part of an industrial automation system according to an embodiment;
FIG. 3 illustrates the use of an annotation relationship data structure according to an embodiment;
FIGs. 4A, 4B show particular examples of access data structures according to embodiments of the invention;
FIG. 5 is an example of a portion in a technical dictionary which may be used with certain embodiments, and
FIG. 6 is a diagram that shows an example of a generic computer device and a generic mobile computer device, which may be used with the techniques described here.

### Detailed Description

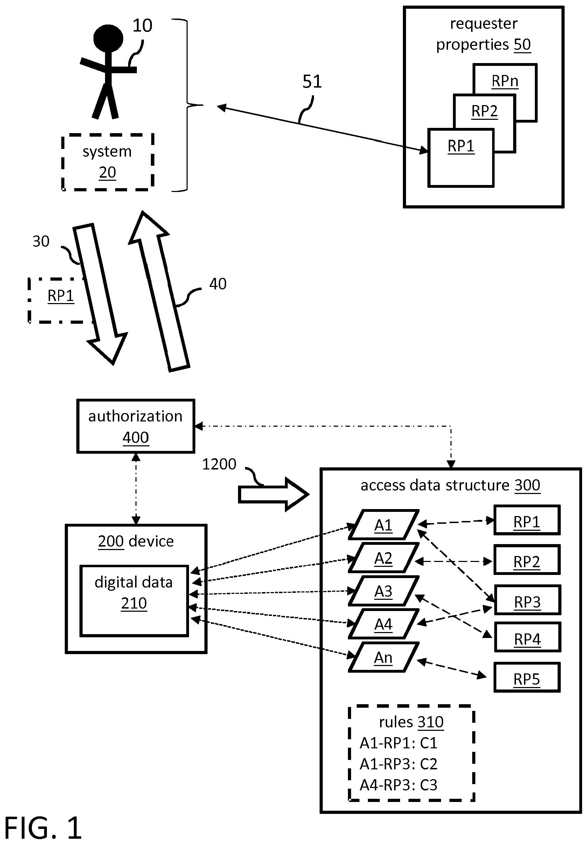

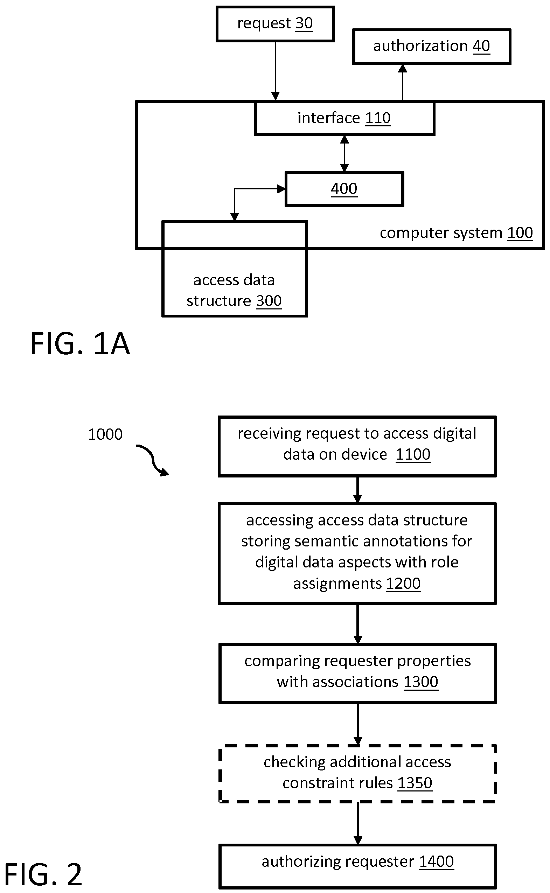

FIG. 1 illustrates a scenario with a requester 10, 20 requesting 1100 access to digital data 210 of a device 200 which forms part of an industrial automation system. The access request is processed by an authorization check component 400 by using a particular access data structure 300. FIG. 1 is described in the context of FIG. 1A showing a simplified block diagram of a computer system 100 for authorizing access to the digital data 210 of the device 200. FIG. 2 is a simplified flowchart of a computer-implemented method 1000 for authorizing access to the digital data of the device according to an embodiment. In the following description, functions performed by the computer system 100 of FIG. 1A are described in the context of FIG. 1 and the flow chart of FIG. 2. Therefore, the following description refers to reference numbers of FIG. 1, FIG. 1A and FIG. 2.

The computer system 100 and the industrial automation system including the device 200 are communicatively coupled via standard interface technology enabling the exchange of data between the systems and respective devices. For example, the systems may be connected via a local area network such as an intranet of the entity operating the industrial automation system (e.g., LAN, WLAN), or a wide area network (e.g., the Internet).

Typically, the devices forming part of an industrial information system are equipped with all kinds of sensors which provide digital data about the technical status of the respective devices. For configuration and/or control purposes, human users 10 (e.g., operators, service engineers, etc.) or other systems 20 may request access to the digital data 210 of a particular device 200. Such digital data may include all kinds of technical status data measured by respective sensors but also other technical information, such as for example, the device type, serial number, connection data, etc. A human user 10 may request data access, for example, for updating configuration data, system engineering purposes, technical status monitoring, etc. Such purposes illustrate various potential uses of the digital data for different purposes and reflect different semantic contexts for such data. A system 20 may request data access, for example, to send control instructions to be received by the device, to retrieve technical status data for status prediction, etc. A person skilled in the field of industrial automation is able to transfer the herein disclosed approach of semantics-based information security to any device data use scenario known in the field of industrial automation.

For security reasons, it is desirable that not each data requester receives authorization to the requested data. Access control systems, such as role based access control RBAC systems are well known in the art to implement security policies for industrial automation systems which allow to control the access of a requester to the requested data. As mentioned above in the summary section, such existing security systems have disadvantages with regards to flexibility and robustness of the security mechanisms in industrial automation systems where access to large numbers of devices needs to be controlled with each device having a plurality of data objects. In such scenarios there can be easily hundreds of thousands of data objects for which respective access control mechanisms need to be implemented. For this purpose, the requestor is equipped with a set of (access) permissions defining for the requestor 10, 20 what is allowed for the requestor (e.g., which data access type like read or write is allowed for which data of which device). Such permissions are referred to as requestor properties RP1 of the requestors RP1 herein. The requestor properties can either be defined directly for the respective user 10, 20 by way of assigning permissions to the identifier of the user (e.g., user ID or application ID of the application running on system 20 requesting the data access). In RBAC systems, permissions are bundled in so-called roles RP1 to RPn. Such roles include predefined sets of permissions which are appropriate for certain activities. For example, a role "energy monitoring" can bundle all access permissions needed to perform the activities which are needed for monitoring the energy behavior (energy consumption) in the industrial automation system. By using roles, only one respective role profile needs to be defined which can then be assigned to all users or system applications performing energy monitoring activities. In the example of FIG. 1, the role RP1 is assigned 51 to the requestor 10, 20. That is, the request 30 is made with the permissions bundled in the requestor property RP1.

The request 30 is then received 1100 by the authorization check component 400 via interface 110. The authorization check component 400 is part of the authorization system 100. However, the computer system 100 can be a distributed computer system. In one embodiment, the authorization check component 400 may be part of the device 200. This may be the case if the device provides many functions and has onboard intelligence in the form of memory and computing power. In another embodiment, where the device may be a low intelligence device (e.g., a valve with a status sensor providing status information about the technical state (e.g. OPEN or CLOSED) of the valve), the authorization check component may be implemented as a separate entity which is communicatively coupled with the device 200 so that it knows about each data object provided by the device 200.

In response to the request 30, the authorization check component 400 accesses 1200 the access data structure 300. The access data structure stores associations A1:RP1, A1:RP3, A2:RP2, A3:RP4, A4:RP3, An:R5 between requester properties 50 and the one or more annotations A1 to An. The access data structure can be interpreted as a security policy which defines which data (represented by the annotations A1 to An) require which permissions (as defined in the requester properties RP1 to RP5) to be accessed by the requester 10, 20. In the example, the digital data represented by the annotation A1 can be accessed if the requester has at least one of the requester properties RP1 or RP3 (both are associated with annotation A1 through direct assignments represented by the dashed arrows between the annotation A1 and the respective requester properties). The digital data represented by annotation A2 can be accessed if the requester has the requester property RP2, and so on. In the example, the requester 10,20 has the requester property RP1 (illustrated by the double arrow 51). For example, RP1 may correspond to a particular role which defines the permissions of the respective user when acting in this role. Alternatively, RP1 could also represent the user's ID where the permissions are directly defined for the ID. These permissions are now available when sending the data access request 30 to the authorization check component 400.

In the example, the digital data 210 has the annotations A1 to A5. The annotations may be directly stored on the device 200 together with the digital data 210 or they may be stored on a separate entity which maps the annotations to the device data 210 accordingly. For example, annotations may be stored on so-called Internet of Things (loT) gateway. An loT gateway is a physical device or software program that serves as the connection point between the cloud and controllers, sensors and intelligent devices of the industrial automation system. An loT gateway can also act as a device forming part of the industrial automation system as defined by the independent claims. For example, all data moving to the cloud, or vice versa, goes through the gateway, which can be either a dedicated hardware appliance or software program. An loT gateway may also be referred to as an intelligent gateway or a control tier in an industrial automation system. Some sensors generate tens of thousands of data points per second. An loT gateway can provide a place to preprocess such data locally at the edge before providing the data to other components of the industrial automation system. When data is aggregated, summarized and tactically analyzed at the edge, it minimizes the volume of data that needs to be forwarded on to other components, which can have a big impact on response times and network transmission costs. For convenience, the dotted arrows between the digital data 210 and the annotations A1 to An in the access data structure 300 represent the annotations which are mapped to the device data 210. It is to be noted that n annotations does not necessarily mean that there are also n data objects stored on the device. Rather, multiple annotations may relate to the same data object. For example, a data object may be described in multiple technical standards with corresponding technical dictionaries. In this case, each dictionary entry for the respective data object may result in a respective annotation of the same data object.

The overlap of the access data structure 300 with the computer system 100 in FIG. 1A indicates that the access data structure 300 can be stored on the same computer system 100 which includes the authorization check component 400 but it may also be stored remotely in such a way that the authorization check component can access the access data structure via corresponding interfaces. For example, the authorization check component 400 may be run on an loT gateway or on any other computing device with respective processing an memory capacity.

The authorization check component 400 then compares 1300 at least one requester property of the requester with the requester properties associated with the annotations of the digital data 210 for which access is requested. Typically, the authorization check component checks all of the requester properties of the requester 10, 20. However, in some embodiments, the authorization check component may stop with the comparison if a first match between the requestor properties of the requester associated with the request 30 and the requestor properties RP1 to RP5 associated with the annotations A1 to An is identified. If this match already indicates that the requester is entitled to access the digital data 210 evaluations of further requester properties associated with the request 30 can be skipped for performance reasons. In other words, if the at least one requester property RP1 associated with the request 30 is part of at least one association A1:RP1 the requester has all the permissions required to access the requested digital data object which is represented by the respective annotation A1. In this case, the authorization check component 300 authorizes 1400 the requester 10, 20 to access the digital data represented by the at least one respective annotation A1 which is associated with the at least one requester property RP1 in accordance with the permissions as defined by the at least one requester property RP1. The authorization (illustrated by arrow 40) is provided in line with standard authorization technologies which are well known in the art.

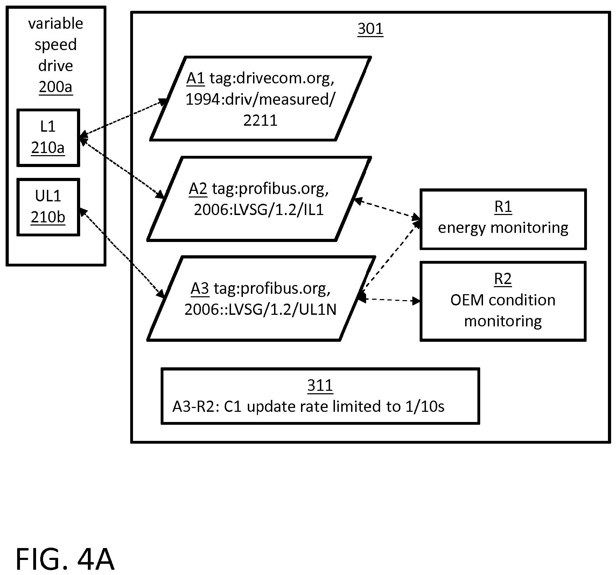

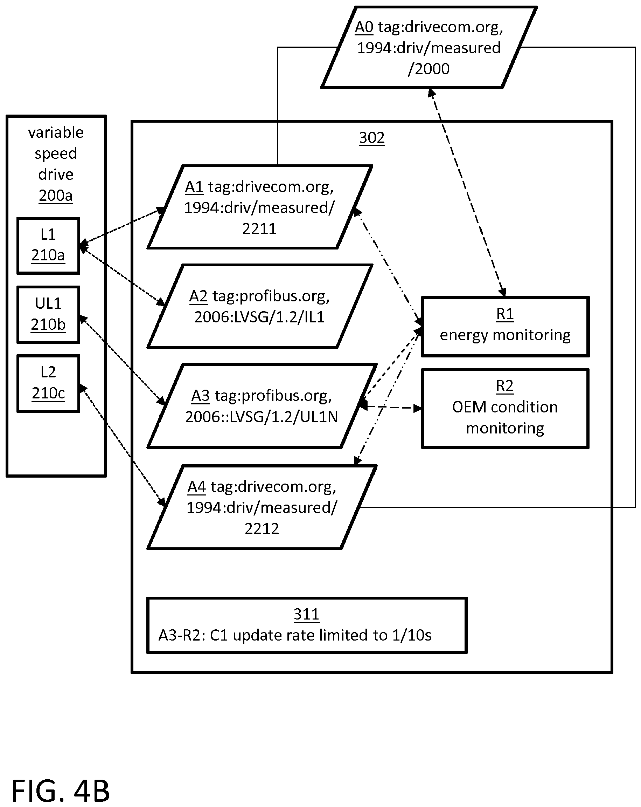

In the example of FIG. 1, the requester only has the requester property RP1. Therefore, when comparing RP1 with the requester properties associated with annotations of the requested data 210, only the one association A1:RP1 is identified. That is, the requester receives the authorization only for accessing the data object to which the annotation A1 is mapped. In case there are further data objects of the device which are mapped to the annotations A2 to An, no access is authorized for the requester. Assuming that a first data object is tagged with three annotations A1 to A3, the requester will be authorized to access this data object because there is at least A1 being associated with the requester's property RP1 including corresponding permissions. The various data objects of the digital data 210 are not shown in FIG. 1. Detailed examples with multiple data objects are described in the context of FIGs. 4A, 4B.

The decoupling of the data object layer (level of digital device data) and the access permission layer (level of requestor property definitions) by an intermediate machine-readable semantic layer (level of the annotations) enables a semantics-based information security (SBIS) approach in industrial automation systems, or in general in systems which are based on the Internet of Things with many interconnected devices. The SBIS approach allows specifying information security policies more naturally/easily by defining access rights based on what data actually mean and not where they are stored. This enables to leverage information models with machine-readable semantics (in the form of digital data annotations) to fully separate the concerns of managing requesters (e.g., users), requester properties with permissions (e.g., user roles), data models, and access rights in a flexible and secure manner by design. When being presented with an access request, the authorization check component checks the semantics of the data object(s) in question and only needs to confirm authorization of the requester (role) against this semantics. That is, access rights are primarily set on semantics, not on individual data objects. Naturally, adding additional criteria such as the location of a request and/or the location of the data source (device) can still be considered where needed.

In industrial automation today, there is substantially no access control on fieldbuses or Industrial Ethernet protocols like PROFINET IO. OPC UA offers security mechanisms, including the authentication of applications and users. In the IT domain, security or user management typically uses a role or user group concept: access is granted based on roles/group membership, users have one or more roles/group memberships. OPC Unified Architecture (OPC UA) application authentication is similar to this role concept. To handle authorization on resources (e.g., computers, file systems, embedded data models), the rights (permissions) of users or roles are configured on the individual resource as a kind of Access Control List (ACL). Maintaining ACLs is error prone. To achieve good levels of security still requires explicit whitelisting, especially in the Industrial Internet of Things (IIoT). Especially on embedded devices, this is currently not feasible despite the advantages of OPC UA. While data requesters do have roles/user groups, resources or data objects do not have a similar concept. This asymmetry is likely to cause security gaps and leads to less robust and reliable security solutions.

In the disclosed SBIS approach access rights can also be tied to the meaning of data (annotations), and not only to paths/addresses of resources or data variables. The concept of user roles or groups is transferred to resources/data allowing the disclosed novel authorization approach. This allows users and/or engineers of the industrial automation system to specify information security policies in a more robust manner by defining the access rights based on the meaning of data and not their storage locations which leads to a higher level of security for the users by design. Whitelisting becomes feasible.

Authorizing by data semantics is much closer to security objectives (e.g., which type of user may access which type of information). Because the meaning of data can be understood by humans defining the security policies, the specification of the data access control structures is less error prone compared to the prior art situation where technical descriptors of data without any semantic meaning (for the cognitive ability of humans) had to be handled. During the operation of the industrial automation systems only information semantics needs to be managed for the information sources (i.e., the devices with the digital data) for validating that a requestor is authorized to access certain types of semantics (i.e., the identifiers for the meta-data of the digital data 210 characterizing the semantic meaning of the digital data in accordance with a semantic technical dictionary).

In one embodiment, the access data structure 300 further stores one or more rules 310. A particular rule defines an additional access constraint C1, C2, C3 for a particular association A1:RP1, A1:RP3; A4:RP3. The additional access constraint rules 310 are checked 1350 by the authorization check component when data access is authorized to a particular data object based on an association which includes a requester property of the requester. Authorizing 1400 is then executed by the authorization check component in accordance with the respective additional access constraint. For example, an additional access constraint C1 can relate to a limitation of the number of allowed accesses during a predefined time interval for the respective association. For example, the association A1:RP1 may authorize a requester with the permissions of RP1 to access the data object of the digital data 210 mapped to the annotation A1. However, the additional constraint C1 for this association may define that this access is only allowed once every hour but not more than 10 times per day. In another example, an additional access constraint C2 may relate to one or more allowed access types. In the example, a requester with the permissions of RP3 would also be authorized to access the data object mapped to A1. Assuming that RP3 provides permissions for any read or write operation, C2 can define the additional constraint that for the particular association A1:RP3 the access type "write" is required.

The additional constraints allow to define more granular access rules based on the semantic meaning of the respective data objects while leaving unchanged all the requestor property definitions which typically define more general security policies. Again, this feature contributes to the overall robustness of the disclosed SBIS approach because the number of requester property definitions (e.g., the number of roles) can be kept at a manageable number where, at the same time, a high granularity of data object or data device specific constraints can be handled through the semantics of the data objects at the data source level. Using the annotations with their meanings understandable by humans for the definitions of the additional constraints provides improved robustness with improved security granularity.

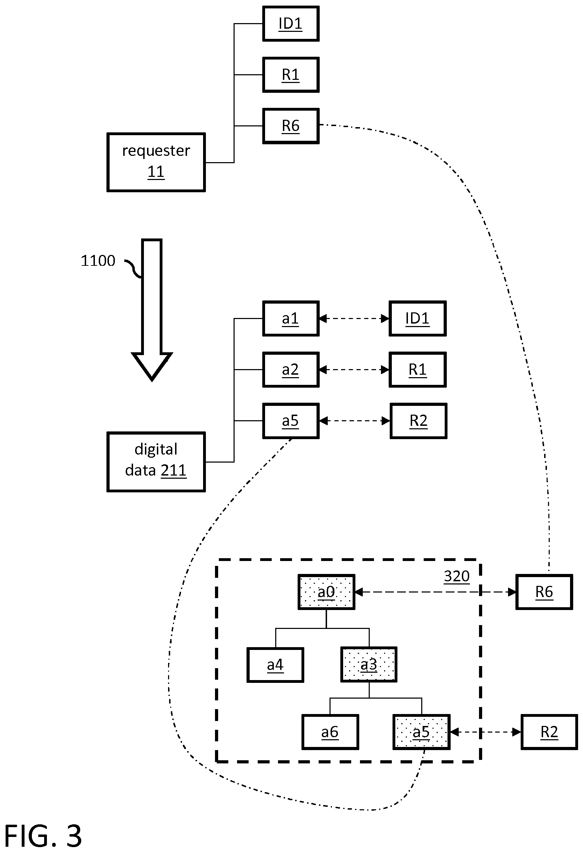

FIG. 3 illustrates the use of an annotation relationship data structure 320 according to one embodiment of the SBIS approach. In the example access data structure 300 (ADS) in FIG. 1 the requester property RP1 is associated with the particular annotation A1 by a direct assignment of the requester property to the particular annotation A1 as illustrated by the respective dashed arrow. Also the other associations shown in ADS 300 are implemented as direct assignments (illustrated by dashed arrows). In other words, the security policy as defined by ADS 300 provides access authorizations to the respective data objects mapped to the annotations A1 to An in each case where at least one of the requester properties RP1 to RP5 is matches with a requester property of the received data access request. Introducing the concept of annotation relationship data structures adds more flexibility to the authorizing step as described in the following.

In the example of FIG. 3, the requester 11 has three requestor properties ID1, R1, R6. ID1 is the user identifier of the requester and some permissions are directly defined at this level. Further access permissions are added for the requester 11 via two different roles R1 and R6. The requester sends a request to access the digital data 211. The request is received 1100 by the authorization check component. The digital data is pre-annotated with the semantic identifiers (annotations) a1, a2, a5. The access data structure in this example defines the following associations: a1:ID1, a2:R1, a5:R2. That is, the authorization check component authorizes for the requester 11 access to the data objects mapped to a1 and a2 because the request is sent with the permissions defined for ID1 and R1 which are part of the respective associations.

However, at a first glance, the requester does not have the permissions of R2 which are required to access the data object mapped to the annotation a5. In this embodiment, the access data structure is complemented by a predefined annotation relationship data structure 320 (ARDS) which defines relationships between annotations a0, a3, a4, a5, a6. In the example, ARDS 320 is a simple hierarchical tree structure with a0 being the root node of the hierarchy. In the example, the root node a0 has an association with the requestor property R6 which is the third requestor property of the requestor 11. That is, the authorization check component would authorize the requester to access a data object mapped to a0. However, the association between a5 and R6 is not defined by a direct assignment. Nevertheless, the authorization check component can check if any permissions for accessing the data object mapped to a5 can be derived from ARDS 320. In the example, a0 is the parent node of a3 which is the parent node of a5. The relationship path between a0 and a5 is illustrated by the dotted rectangles. In other words, a0 is a supra-node of the annotation a5. As the requester property R6 of the requestor 11 is associated with a5 through the relationship path a0-a3-a5, the authorization check component regards the permissions of R6 as sufficient to authorize access to a5 because a0, being a supra-node of a5, is at a higher level in ARDS 320 than a5. Therefore, permission rights to access the supra-node include the permission rights to access the respective sub-nodes. In other words, the association a5:R6 is not a direct assignment but rather is derived from a valid path of ARDS 320 linking the annotation a5 of the requested data object and its supra-node annotation a0 for which R6 provides corresponding permissions.

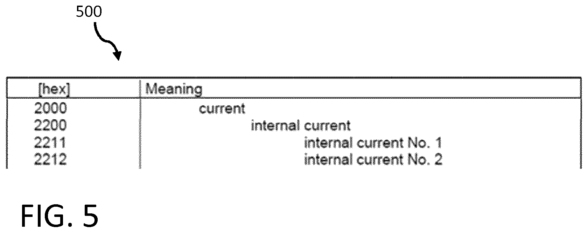

FIGs. 4A, 4B show particular examples of access data structures 301, 302 according to embodiments of the invention. In the example of FIG. 4A, the device 200a is a variable speed drive with two digital data objects 210a, 210b. The first data object 210a (L1) provides the value of the electric current L1 on the device input side, as measured. The second data object 210b provides the value of the voltage UL1 from L1 to Neutral, as measured The current L1 is annotated with two annotation tags A1, A2. Each tag is an identifier for L1 from a respective standard. The A1 tag is derived from the fault profile (not the measured value) as defined by DRIVECOM user organization. An example of DRIVECOM standard identifiers is shown in FIG. 5 illustrating some code parameters in column [hex] of table 500. In this example, the identifier 2211 relates to the semantic meaning "internal current No. 1". The syntax of the annotation tags used in the examples is based on the definition provided in the "Request for Comments: 4151" of the Network Working Group of the World Wide Web Consortium in October 2005 (available at https://www.ietf.org/rfc/rfc4151.txt). For example, annotation tag A1: tag:drivecom.org,1994:driv/measured/2211 may have the structure: "tag:" | DNS name of tagging entity ", " year":" | specific. Specific is the name-space-specific part of the tag URI that can freely be chosen in the context of the tagging entity (e.g., to reference a particular part of a standard published by said entity providing a semantic definition). An alternative notation for the annotation tags can be used in accordance with IRDI-compliant IDs for semantic annotations obtainable from http://wiki.eclass.eu/wiki/IRDI.

The traditional OPC UA companion specifications define one or more namespaces and within each namespace a number of nodes (objects, variables, methods, etc.) with defined browse names or node IDs. This mostly relates to object types and a few singleton object instances (e.g., the DeviceSet in the OPC UA for Devices companion specification version 1.01, release date 2013-07-25 obtainable at https://opcfoundation.org/developer-tools/specifications-unified-architecture/opc-unified-architecture-for-devices-di/; also available as International Standard IEC 62541-100:2015 edition 1.0, publication date 2015-03-25). A list of further companion specifications is available at https://opcfoundation.org/developer-tools/specifications-unified-architecture.

It is to be noted that references to object types as used in the OPC UA companion specifications and the semantic annotation tags of the data objects are fully decoupled. For example, a data object representing a variable speed drive would be derived from the DeviceType object type defined in OPC UA for Devices; the fact that the data contained in the data object relates to a VSD is not implied by the object type ("parent class"). Furthermore, most relevant technologies like OPC UA have no multiple inheritance, so different qualities like being a VSD, an electrical consumer, a physical device (as opposed to a software-service) cannot be directly expressed through a type system. Typically, companion specifications focus on one usage aspect for the described data objects (e.g. engineering) and ignore others (asset management, energy monitoring).

Note that the referenced specifications themselves are not necessarily machine-readable. Humans read standards, then build machines with a behavior and an information model. The assumption in machine development is that if two machines have the same semantic identifiers in their models (e.g. annotation tags), then the (hidden) implementation of their behavior also is the same (i.e. standard-compliant). It is therefore sufficient if machines check against these indicators. Compared to using type systems like OPC UA companion specifications, the proposed semantic annotation tags support multi-language support (in the sense of multiple technical dictionaries providing multiple semantic meanings for the same data objects) and multi-semantics on existing data models. New meanings (semantics) or languages (standards) can be retrofit without changing the structure of the underlying (and possible standardized) data model.

In the example of FIG. 4A, the L1 data object is annotated in two languages (of the two technical dictionaries DRIVECOM and PROFIBUS). Besides the DRIVECOM language annotation A1 a second annotation A2 in the PROFIBUS language is used: tag:profibus.org,2006:LVSG/1.2/IL1.

The UL1 data object is only tagged with the annotation A3 in the PROFIBUS language: tag:profibus.org,2006::LVSG/1.2/UL1N.

The ADS 301 stores associations A2:R1, A3:R1 and A3:R2. In the example the requester property R1 corresponds to the role "energy monitoring" and R2 corresponds to the role "OEM condition monitoring". As a result, if the requesting user has the role R1 the authorization check component authorizes the user to access both data objects, L1 and UL1 because the role R1 is associated with the corresponding semantic identifiers A2 and A3 as both values are required for performing the activities for energy monitoring. If the user has the role R2 only access to the voltage value UL1 will be allowed because for condition monitoring the value of the current L1 is not necessary. Further, in the example, an additional constraint C1 is defined in the rules 311. The additional constraint defines that for the association A3-R2 (the OEM condition monitoring of the voltage value UL1) the update rate for providing updated voltage values to the requesting user is limited to 1 update per 10 seconds.

In the example of FIG. 4B, the variable speed drive 200a has a further data object 210c (L2) for the internal current value L2. The annotation A4:
tag:drivecom.org,1994:driv/measured/2212 is mapped to the data object L2. A2 is an annotation in the DRIVECOM language with the semantic meaning "internal current No. 2" as indicated in the table of FIG. 5 for the parameter "2212".

In the example of FIG. 4B, role R1 has no direct assignment to A2 which would allow access to the data object L1. Rather, R1 and R2 are associated only with A3 via direct assignments (dashed arrows) which allows access to the UL1 voltage data object.. However, in this example, an annotation relationship data structure is available. R1 is associated with the annotation tag A0: tag:drivecom.org,1994:driv/measured/2000 which is a supra-node for all current nodes A1, A4 of the device 200a in the DRIVECOM technical dictionary language. For example, the annotation relationship data structure may be implemented as an ontology which defines a taxonomy for the various annotations mapped to the data objects of device 200a. the supra-node A0 ("tag...2000") has a "has" relation with the subordinate nodes A1 ("tag...2211") and A4 ("tag...2212"). This results in an indirect association (shown as dash-dotted arrows) of R1 with the annotation tags A1, A4. That is, at the semantic identifier level, the energy monitoring role R1 is, at a first glance, not entitled to access the particular current data objects of the variable speed drive 200a. However, the semantic relationships between the annotation tags of the DRIVECOM language indicate to the authorization check component that R1 nevertheless has the required permissions to access all current data objects L1, L2 of the device 200a and therefore the respective request of a user having role R1 will be allowed.

Defining relationships between annotation tags at the semantic level of the semantic identifiers describing the meaning of data allows higher flexibility for defining security policies for data access. In the example, the relevant meaning of the data objects L1 and L2 is that both of them are currents. Only this abstraction of the data objects at the semantics level allows a grouping into "all currents" ("tag...2000"). In prior art solutions, a data object by data object assignment to roles is implemented at the technical descriptor level of device parameters which is an error prone task very inflexible when changes occur. The increased flexibility of the SBIS approach facilitates the maintenance of security policies and, at the same, time makes the design of the security system less error-prone. The multi-language capability of the SBIS approach by using multiple annotations from different technical standards or dictionaries allows make use of a particular language which is most appropriate for particular device-role combinations whereas for other device-role combinations other languages may be more appropriate. The SBIS approach does not force security policies to be based on a single language standard (i.e., a single technical dictionary for everything) but allows in a very flexible manner to use any language. Languages with powerful annotation relationship data structures for a particular class of devices increase both, the flexibility and the robustness of the security policies for authorizing access to the respective device data.

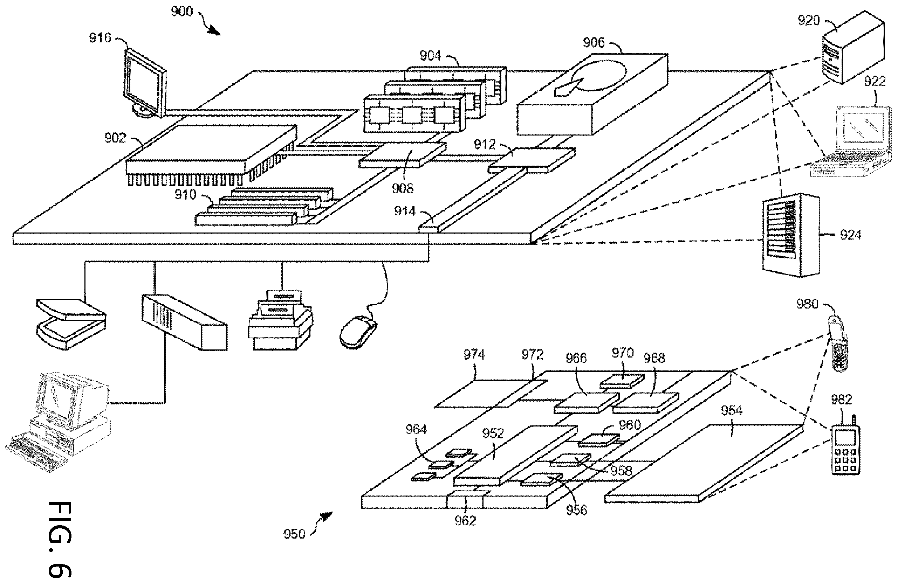

FIG. 6 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to a computer system 100 as illustrated in FIG. 1. Computing device 950 is intended to represent various forms of mobile devices, such as personal digital assistants, cellular telephones, smart phones, and other similar computing devices. For example, computing device 950 may be used by a requester to submit a request to the computer system 100 for accessing the digital data of a device forming part of an industrial automation system. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processing units and/or multiple buses may be used, as appropriate, along with multiple memories and types of memory. Also, multiple computing devices 900 may be connected, with each device providing portions of the necessary operations (e.g., as a server bank, a group of blade servers, or a processing device).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processing units. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provided in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, EDGE, UMTS, LTE, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a backend component (e.g., as a data server), or that includes a middleware component (e.g., an application server), or that includes a front end component (e.g., a client computer having a graphical user interface or a Web browser through which a user can interact with an implementation of the systems and techniques described here), or any combination of such backend, middleware, or frontend components. The components of the system can be interconnected by any form or medium of digital data communication (e.g., a communication network). Examples of communication networks include a wireless communication network (e.g., 4G, 5G, etc.), a local area network ("LAN"), a wireless local area network ("WLAN"), a wide area network ("WAN"), and the Internet.

In addition, the logic flows depicted in the figures do not require the particular order shown, or sequential order, to achieve desirable results.

## Claims

1. A computer implemented method for authorizing access to digital data (210) of a device (200) which forms part of an industrial automation system, the digital data (200) being annotated with one or more annotations (A1 to An) wherein each annotation is an identifier for meta-data of the digital data (210) characterizing the semantic meaning of the digital data in accordance with a semantic technical dictionary, the semantic technical dictionary describing the digital data of devices for data exchange purposes between distributed components in a networked system from a user's point of view, wherein a particular data object of the digital data having multiple annotations is described with different identifiers from different semantic dictionaries, the method comprising:
receiving (1100), from a requester (10, 20) having one or more requester properties (50) which define access permissions for the requester, a request (30) to access the digital data (210) of the device;
in response to the request, accessing (1200) an access data structure (300), the access data structure storing associations (A1:RP1, A1:RP3, A2:RP2, A3:RP4, A4:RP3, An:R5) between requester properties (50) and the one or more annotations (A1 to An);
comparing (1300) at least one requester property of the requester (RP1) with the requester properties (RP1 to RP5) associated with the annotations (A1 to An); and
if the at least one requester property (RP1) is part of at least one association (A1:RP1), authorizing (1400) the requester (10, 20) to access the digital data represented by the at least one respective annotation (A1) which is associated with the at least one requester property (RP1) wherein authorizing is in accordance with permissions as defined by the at least one requester property; else rejecting the request (30).

2. The method of claim 1, wherein the access data structure (300) further stores one or more rules (310), and a particular rule defines an additional access constraint (C1, C2, C3) for a particular association (A1:RP1, A1:RP3; A4:RP3) and wherein authorizing (1400) is executed in accordance with the additional access constraint.

3. The method of claim 2, wherein the additional access constraint (C1, C2, C3) relates to a limitation of the number of allowed accesses during a predefined time interval, or to one or more allowed access types, or to one or more time intervals during the day during which access is allowed, or to a maximum data quantity which is allowed to be accessed during one or more predefined time intervals.

4. The method of any of the previous claims, wherein the associations reflect a potential use of the digital data by the requester being selected from the following group of potential uses: sensing, actuation, control, monitoring, supervision, communication, data analysis, scheduling and/or planning, optimization, maintenance, ordering, control of the functional behavior of the system including configuration of the system, monitoring and analysis of the functional system state and conditions including energy monitoring and/or condition monitoring.

5. The method of any of the previous claims, wherein the comparing and authorizing steps are executed by the device (200).

6. The method of any of the claims 1 to 4, wherein the comparing and authorizing steps are executed by an authorization entity (400) of the automation system which is communicatively coupled with the device (200).

7. The method of any of the previous claims, wherein the at least one requester property of the requester (10, 20) is an identifier of the requester and/or a role of the requester.

8. The method of any of the previous claims, wherein the at least one requester property of the requester (10, 20) is associated with a particular annotation by a direct assignment of the at least one requester property of the requester (10, 20) to the particular annotation.

9. The method of any of the claims 1 to 7, wherein a predefined annotation relationship data structure (320) defines relationships between annotations (a0, a3, a4, a5, a6), and wherein the at least one requester property (R6) of the requester (10, 20) is associated with a particular annotation (a5) by an assignment of the at least one requester property (R6) to an annotation node (a0) of the annotation relationship data structure (320) which is a supra-node of the particular annotation (a5).

10. The method of any of the previous claims, wherein the annotations of the digital data (210) of the device (200) are stored in a memory portion of the device (200).

11. The method of any of the claims 1 to 9, wherein the annotations of the digital data (210) of the device (200) are stored on a remote storage location communicatively coupled with the device (200).

12. A computer program product for authorizing access to digital data of a device which forms part of an industrial automation system, the computer program product comprising instructions that when loaded into a memory of a computing device and executed by at least one processor of the computing device cause the computing device to execute the steps of the computer-implemented method according to any one of the previous claims.

13. A computer system (100) for authorizing access to digital data (210) of a device (200) which forms part of an industrial automation system, the digital data (200) being annotated with one or more annotations (A1 to An) wherein each annotation is an identifier for meta-data of the digital data (210) characterizing the semantic meaning of the digital data in accordance with a semantic technical dictionary, the semantic technical dictionary describing the digital data of devices for data exchange purposes between distributed components in a networked system from a user's point of view, wherein a particular data object of the digital data having multiple annotations is described with different identifiers from different semantic dictionaries, the computer system comprising:
an interface (110) configured to receive, from a requester (10, 20) having one or more requester properties (50) which define access permissions for the requester, a request (30) to access the digital data (210) on the device (200); and
an authorization check component (400) configured:
to access an access data structure (300) in response to the request (30), the access data structure (300) storing associations (A1:RP1, A1:RP3, A2:RP2, A3:RP4, A4:RP3, An:R5) between requester properties (50) and the one or more annotations (A1 to An);
to compare at least one requester property of the requester (RP1) with the requester properties (RP1 to RP5) associated with the annotations (A1 to An); and
if the at least one requester property (RP1) is part of at least one association (A1:RP1), to authorize the requester (10, 20) to access the digital data represented by the at least one respective annotation (A1) which is associated with the at least one requester property (RP1) wherein authorizing is in accordance with permissions as defined by the at least one requester property; else to reject the request.

14. The computer system of claim 13, wherein the access data structure (300) further stores one or more rules (310), and a particular rule defines an additional access constraint (C1, C2, C3) for a particular association (A1:RP1, A1:RP3; A4:RP3) and wherein the authorization check component (400) is further configured to execute authorizing in accordance with the additional access constraint.

15. The computer system of any of claims 13 to 14, wherein a predefined annotation relationship data structure (320) defines relationships between annotations (a0, a3, a4, a5, a6) via corresponding annotation nodes of the predefined annotation relationship data structure, and wherein the at least one requester property (R6) of the requester (10, 20) is associated with a particular annotation (a5) by an assignment of the at least one requester property (R6) to an annotation node of the annotation relationship data structure (320) which is a supra-node of an annotation node associated with the particular annotation (a5).

## Patentansprüche

1. Computerimplementiertes Verfahren zum Autorisieren des Zugriffs auf digitale Daten (210) einer Vorrichtung (200), die Teil eines industriellen Automatisierungssystems ist, wobei die digitalen Daten (200) mit einer oder mehreren Anmerkungen (A1 bis An) versehen sind, wobei jede Anmerkung ein Bezeichner für Metadaten der digitalen Daten (210) ist, die die semantische Bedeutung der digitalen Daten gemäß einem semantischen technischen Wörterbuch charakterisieren, wobei das semantische technische Wörterbuch die digitalen Daten von Vorrichtungen für Datenaustauschzwecke zwischen verteilten Komponenten in einem vernetzten System aus der Sicht eines Benutzers beschreibt, wobei ein bestimmtes Datenobjekt der digitalen Daten, das mehrere Anmerkungen aufweist, mit verschiedenen Bezeichnern aus verschiedenen semantischen Wörterbüchern beschrieben wird, wobei das Verfahren Folgendes umfasst:
Empfangen (1100), von einem Anforderer (10, 20), der eine oder mehrere Anforderereigenschaften (50) aufweist, die Zugriffsberechtigungen für den Anforderer definieren, einer Anforderung (30), auf die digitalen Daten (210) der Vorrichtung zuzugreifen;
als Reaktion auf die Anforderung, Zugreifen (1200) auf eine Zugriffsdatenstruktur (300), wobei die Zugriffsdatenstruktur Verknüpfungen (A1:RP1, A1:RP3, A2:RP2, A3:RP4, A4:RP3, An:R5) zwischen Anforderereigenschaften (50) und der einen oder den mehreren Anmerkungen (A1 bis An) speichert;
Vergleichen (1300) wenigstens einer Anforderereigenschaft des Anforderers (RP1) mit den Anforderereigenschaften (RP1 bis RP5), die mit den Anmerkungen (A1 bis An) verknüpft sind; und
falls die wenigstens eine Anforderereigenschaft (RP1) Teil wenigstens einer Verknüpfung (A1:RP1) ist, Autorisieren (1400) des Anforderers (10, 20), auf die digitalen Daten zuzugreifen, die durch die wenigstens eine jeweilige Anmerkung (A1) dargestellt werden, die mit der wenigstens einen Anforderereigenschaft (RP1) verknüpft ist, wobei das Autorisieren gemäß Berechtigungen erfolgt, wie sie durch die wenigstens eine Anforderereigenschaft definiert sind; sonst, Ablehnen der Anforderung (30).

2. Verfahren nach Anspruch 1, wobei die Zugriffsdatenstruktur (300) ferner eine oder mehrere Regeln (310) speichert und eine bestimmte Regel eine zusätzliche Zugriffsbeschränkung (C1, C2, C3) für eine bestimmte Verknüpfung (A1:RP1, A1:RP3; A4:RP3) definiert und wobei das Autorisieren (1400) gemäß der zusätzlichen Zugriffsbeschränkung ausgeführt wird.

3. Verfahren nach Anspruch 2, wobei sich die zusätzliche Zugriffsbeschränkung (C1, C2, C3) auf eine Begrenzung der Anzahl der erlaubten Zugriffe während eines vordefinierten Zeitintervalls oder auf eine oder mehrere erlaubte Zugriffsarten oder auf ein oder mehrere Zeitintervalle während des Tages, in denen ein Zugriff erlaubt ist, oder auf eine maximale Datenmenge, auf die während eines oder mehrerer vordefinierter Zeitintervalle zugegriffen werden darf, bezieht.

4. Verfahren nach einem der vorhergehenden Ansprüche, wobei die Verknüpfungen eine potenzielle Verwendung der digitalen Daten durch den Anforderer widerspiegeln, die aus der folgenden Gruppe von potenziellen Verwendungen ausgewählt ist: Erfassen, Betätigen, Steuern, Überwachen, Kommunizieren, Datenanalyse, Terminieren und/oder Planen, Optimieren, Warten, Ordnen, Steuern des funktionalen Verhaltens des Systems einschließlich Konfiguration des Systems, Überwachen und Analysieren des funktionalen Systemzustands und der Bedingungen einschließlich Energieüberwachung und/oder Zustandsüberwachung.

5. Verfahren nach einem der vorhergehenden Ansprüche, wobei die Vergleichs- und Autorisierungsschritte durch die Vorrichtung (200) ausgeführt werden.

6. Verfahren nach einem der Ansprüche 1 bis 4, wobei die Vergleichs- und Autorisierungsschritte durch eine Autorisierungseinheit (400) des Automatisierungssystems ausgeführt werden, die mit der Vorrichtung (200) kommunikativ gekoppelt ist.

7. Verfahren nach einem der vorhergehenden Ansprüche, wobei die wenigstens eine Anforderereigenschaft des Anforderers (10, 20) ein Bezeichner des Anforderers und/oder eine Rolle des Anforderers ist.

8. Verfahren nach einem der vorhergehenden Ansprüche, wobei die wenigstens eine Anforderereigenschaft des Anforderers (10, 20) mit einer bestimmten Anmerkung durch eine direkte Zuordnung der wenigstens einen Anforderereigenschaft des Anforderers (10, 20) zu der bestimmten Anmerkung verknüpft wird.

9. Verfahren nach einem der Ansprüche 1 bis 7, wobei eine vordefinierte Anmerkungsbeziehungsdatenstruktur (320) Beziehungen zwischen Anmerkungen (a0, a3, a4, a5, a6) definiert und wobei die wenigstens eine Anforderereigenschaft (R6) des Anforderer (10, 20) mit einer bestimmten Anmerkung (a5) durch eine Zuordnung der wenigstens einen Anforderereigenschaft (R6) zu einem Anmerkungsknoten (a0) der Anmerkungsbeziehungsdatenstruktur (320) verknüpft ist, der ein Supraknoten der bestimmten Anmerkung (a5) ist.

10. Verfahren nach einem der vorhergehenden Ansprüche, wobei die Anmerkungen der digitalen Daten (210) der Vorrichtung (200) in einem Speicherabschnitt der Vorrichtung (200) gespeichert werden.

11. Verfahren nach einem der Ansprüche 1 bis 9, wobei die Anmerkungen der digitalen Daten (210) der Vorrichtung (200) auf einem Fernspeicherplatz gespeichert werden, der mit der Vorrichtung (200) kommunikativ gekoppelt ist.

12. Computerprogrammprodukt zum Autorisieren des Zugriffs auf digitale Daten einer Vorrichtung, die Teil eines industriellen Automatisierungssystems ist, wobei das Computerprogrammprodukt Anweisungen umfasst, die, wenn sie in einen Speicher einer Rechenvorrichtung geladen und durch wenigstens einen Prozessor der Rechenvorrichtung ausgeführt werden, die Rechenvorrichtung veranlassen, die Schritte des computerimplementierten Verfahrens nach einem der vorhergehenden Ansprüche auszuführen.

13. Computersystem (100) zum Autorisieren des Zugriffs auf digitale Daten (210) einer Vorrichtung (200), die Teil eines industriellen Automatisierungssystems ist, wobei die digitalen Daten (200) mit einer oder mehreren Anmerkungen (A1 bis An) versehen sind, wobei jede Anmerkung ein Bezeichner für Metadaten der digitalen Daten (210) ist, die die semantische Bedeutung der digitalen Daten gemäß einem semantischen technischen Wörterbuch charakterisieren, wobei das semantische technische Wörterbuch die digitalen Daten von Vorrichtungen für Datenaustauschzwecke zwischen verteilten Komponenten in einem vernetzten System aus der Sicht eines Benutzers beschreibt, wobei ein bestimmtes Datenobjekt der digitalen Daten, das mehrere Anmerkungen aufweist, mit verschiedenen Bezeichnern aus verschiedenen semantischen Wörterbüchern beschrieben wird, wobei das Computersystem Folgendes umfasst:
eine Schnittstelle (110), die konfiguriert ist, um von einem Anforderer (10, 20), der eine oder mehrere Anforderereigenschaften (50) aufweist, die Zugriffsberechtigungen für den Anforderer definieren, eine Anforderung (30) zu empfangen, um auf die digitalen Daten (210) auf der Vorrichtung (200) zuzugreifen; und
eine Autorisierungsprüfungskomponente (400), die für Folgendes konfiguriert ist:
Zugreifen auf eine Zugriffsdatenstruktur (300) als Reaktion auf die Anforderung (30), wobei die Zugriffsdatenstruktur (300) Verknüpfungen (A1:RP1, A1:RP3, A2:RP2, A3:RP4, A4:RP3, An:R5) zwischen Anforderereigenschaften (50) und der einen oder den mehreren Anmerkungen (A1 bis An) speichert;
Vergleichen wenigstens einer Anforderereigenschaft des Anforderers (RP1) mit den Anforderereigenschaften (RP1 bis RP5), die mit den Anmerkungen (A1 bis An) verknüpft sind; und
falls die wenigstens eine Anforderereigenschaft (RP1) Teil wenigstens einer Verknüpfung (A1:RP1) ist, Autorisieren des Anforderers (10, 20), auf die digitalen Daten zuzugreifen, die durch die wenigstens eine jeweilige Anmerkung (A1) dargestellt werden, die mit der wenigstens einen Anforderereigenschaft (RP1) verknüpft ist, wobei das Autorisieren gemäß den Berechtigungen erfolgt, wie sie durch die wenigstens eine Anforderereigenschaft definiert sind; sonst, Ablehnen der Anforderung.

14. Computersystem nach Anspruch 13, wobei die Zugriffsdatenstruktur (300) ferner eine oder mehrere Regeln (310) speichert und eine bestimmte Regel eine zusätzliche Zugriffsbeschränkung (C1, C2, C3) für eine bestimmte Verknüpfung (A1:RP1, A1:RP3; A4:RP3) definiert und wobei die Autorisierungsprüfungskomponente (400) ferner konfiguriert ist, eine Autorisierung gemäß der zusätzlichen Zugriffsbeschränkung auszuführen.

15. Computersystem nach einem der Ansprüche 13 bis 14, wobei eine vordefinierte Anmerkungsbeziehungsdatenstruktur (320) Beziehungen zwischen Anmerkungen (a0, a3, a4, a5, a6) über entsprechende Anmerkungsknoten der vordefinierten Anmerkungsbeziehungsdatenstruktur definiert, und wobei die wenigstens eine Anforderereigenschaft (R6) des Anforderers (10, 20) mit einer bestimmten Anmerkung (a5) durch eine Zuordnung der wenigstens einen Anforderereigenschaft (R6) zu einem Anmerkungsknoten der Anmerkungsbeziehungsdatenstruktur (320) verknüpft ist, der ein Supraknoten eines Anmerkungsknotens ist, der mit der bestimmten Anmerkung (a5) verknüpft ist.

## Revendications

1. Procédé mis en œuvre par ordinateur destiné à autoriser l'accès à des données numériques (210) d'un dispositif (200) qui fait partie d'un système d'automatisation industrielle, les données numériques (200) étant annotées d'une ou plusieurs annotations (A1 à An), chaque annotation étant un identifiant de métadonnées des données numériques (210) caractérisant la signification sémantique des données numériques conformément à un dictionnaire technique sémantique, le dictionnaire technique sémantique décrivant les données numériques de dispositifs destinés à des fins d'échange de données entre des composants distribués dans un système en réseau du point de vue d'un utilisateur, un objet de données particulier des données numériques ayant plusieurs annotations étant décrit avec différents identifiants provenant de différents dictionnaires sémantiques, le procédé comprenant :
la réception (1100), d'un demandeur (10, 20) ayant une ou plusieurs propriétés de demandeur (50) qui définissent des permissions d'accès pour le demandeur, d'une demande (30) pour accéder aux données numériques (210) du dispositif ;
en réponse à la demande, l'accès (1200) à une structure de données d'accès (300), la structure de données d'accès stockant des associations (A1:RP1, A1:RP3, A2:RP2, A3:RP4, A4:RP3, An:R5) entre les propriétés de demandeur (50) et la ou les annotations (A1 à An) ;
la comparaison (1300) d'au moins une propriété de demandeur du demandeur (RP1) avec les propriétés de demandeur (RP1 à RP5) associées aux annotations (A1 à An) ; et
si l'au moins une propriété de demandeur (RP1) fait partie d'au moins une association (A1:RP1), le fait d'autoriser (1400) le demandeur (10, 20) à accéder aux données numériques représentées par l'au moins une annotation respective (A1) qui est associée à l'au moins une propriété de demandeur (RP1), l'autorisation étant conforme aux permissions telles que définies par l'au moins une propriété de demandeur ; sinon le rejet de la demande (30).

2. Procédé selon la revendication 1, dans lequel la structure de données d'accès (300) stocke en outre une ou plusieurs règles (310), et une règle particulière définit une contrainte d'accès supplémentaire (C1, C2, C3) pour une association particulière (A1:RP1, A1:RP3; A4:RP3) et dans lequel l'autorisation (1400) est exécutée conformément à la contrainte d'accès supplémentaire.

3. Procédé selon la revendication 2, dans lequel la contrainte d'accès supplémentaire (C1, C2, C3) concerne une limitation du nombre d'accès autorisés pendant un intervalle de temps prédéfini, ou à un ou plusieurs types d'accès autorisés, ou à un ou plusieurs intervalles de temps pendant la journée pendant lesquels l'accès est autorisé, ou à une quantité maximale de données auxquelles il est possible d'accéder pendant un ou plusieurs intervalles de temps prédéfinis.

4. Procédé selon l'une quelconque des revendications précédentes, dans lequel les associations reflètent une utilisation potentielle des données numériques par le demandeur étant sélectionnée parmi le groupe d'utilisations potentielles suivant : la détection, l'actionnement, la commande, la surveillance, la supervision, la communication, l'analyse des données, la programmation et/ou la planification, l'optimisation, la maintenance, le fait d'ordonner, la commande du comportement fonctionnel du système, y compris la configuration du système, la surveillance et l'analyse de l'état et des conditions du système fonctionnel, y compris la surveillance d'énergie et/ou la surveillance de condition.

5. Procédé selon l'une quelconque des revendications précédentes, dans lequel les étapes de comparaison et d'autorisation sont exécutées par le dispositif (200).

6. Procédé selon l'une quelconque des revendications 1 à 4, dans lequel les étapes de comparaison et d'autorisation sont exécutées par une entité d'autorisation (400) du système d'automatisation qui est couplée en communication avec le dispositif (200).

7. Procédé selon l'une quelconque des revendications précédentes, dans lequel l'au moins une propriété de demandeur du demandeur (10, 20) est un identifiant du demandeur et/ou un rôle du demandeur.

8. Procédé selon l'une quelconque des revendications précédentes, dans lequel l'au moins une propriété de demandeur du demandeur (10, 20) est associée à une annotation particulière par une attribution directe de l'au moins une propriété de demandeur du demandeur (10, 20) à l'annotation particulière.

9. Procédé selon l'une quelconque des revendications 1 à 7, dans lequel une structure de données de relation d'annotation prédéfinie (320) définit des relations entre des annotations (a0, a3, a4, a5, a6), et dans lequel l'au moins une propriété de demandeur (R6) du demandeur (10, 20) est associée à une annotation particulière (a5) par une attribution de l'au moins une propriété de demandeur (R6) à un nœud d'annotation (a0) de la structure de données de relation d'annotation (320) qui est un supra-nœud de l'annotation particulière (a5).

10. Procédé selon l'une quelconque des revendications précédentes, dans lequel les annotations des données numériques (210) du dispositif (200) sont stockées dans une partie de mémoire du dispositif (200).

11. Procédé selon l'une quelconque des revendications 1 à 9, dans lequel les annotations des données numériques (210) du dispositif (200) sont stockées sur un emplacement de stockage distant couplé en communication avec le dispositif (200).

12. Produit programme informatique destiné à autoriser l'accès à des données numériques d'un dispositif qui fait partie d'un système d'automatisation industrielle, le produit programme informatique comprenant des instructions qui, lorsqu'elles sont chargées dans une mémoire d'un dispositif informatique et exécutées par au moins un processeur du dispositif informatique, amènent le dispositif informatique à exécuter les étapes du procédé mis en œuvre par ordinateur selon l'une quelconque des revendications précédentes.

13. Système informatique (100) destiné à autoriser l'accès à des données numériques (210) d'un dispositif (200) qui fait partie d'un système d'automatisation industrielle, les données numériques (200) étant annotées d'une ou plusieurs annotations (A1 à An), chaque annotation étant un identifiant de métadonnées des données numériques (210) caractérisant la signification sémantique des données numériques conformément à un dictionnaire technique sémantique, le dictionnaire technique sémantique décrivant les données numériques de dispositifs destinés à des fins d'échange de données entre des composants distribués dans un système en réseau du point de vue d'un utilisateur, un objet de données particulier des données numériques ayant plusieurs annotations étant décrit avec différents identifiants provenant de différents dictionnaires sémantiques, le système informatique comprenant :
une interface (110) configurée pour recevoir, d'un demandeur (10, 20) ayant une ou plusieurs propriétés de demandeur (50) qui définissent des permissions d'accès pour le demandeur, une demande (30) pour accéder aux données numériques (210) sur le dispositif (200) ; et
un composant de vérification d'autorisation (400) configuré :
pour accéder à une structure de données d'accès (300) en réponse à la demande (30), la structure de données d'accès (300) stockant des associations (A1:RP1, A1:RP3, A2:RP2, A3:RP4, A4:RP3, An:R5) entre les propriétés de demandeur (50) et la ou les annotations (A1 à An) ;
pour comparer au moins une propriété de demandeur du demandeur (RP1) avec les propriétés de demandeur (RP1 à RP5) associées aux annotations (A1 à An) ; et
si l'au moins une propriété de demandeur (RP1) fait partie d'au moins une association (A1:RP1), pour autoriser le demandeur (10, 20) à accéder aux données numériques représentées par l'au moins une annotation respective (A1) qui est associée à l'au moins une propriété de demandeur (RP1),
l'autorisation étant conforme aux permissions telles que définies par l'au moins une propriété de demandeur ; sinon pour rejeter la demande.

14. Système informatique selon la revendication 13, dans lequel la structure de données d'accès (300) stocke en outre une ou plusieurs règles (310), et une règle particulière définit une contrainte d'accès supplémentaire (C1, C2, C3) pour une association particulière (A1:RP1, A1:RP3; A4:RP3) et dans lequel le composant de vérification d'autorisation (400) est en outre configuré pour exécuter l'autorisation conformément à la contrainte d'accès supplémentaire.

15. Système informatique selon l'une quelconque des revendications 13 à 14, dans lequel une structure de données de relation d'annotation prédéfinie (320) définit des relations entre des annotations (a0, a3, a4, a5, a6) par l'intermédiaire de nœuds d'annotation correspondants de la structure de données de relation d'annotation prédéfinie, et dans lequel l'au moins une propriété de demandeur (R6) du demandeur (10, 20) est associée à une annotation particulière (a5) par une attribution de l'au moins une propriété de demandeur (R6) à un nœud d'annotation de la structure de données de relation d'annotation (320) qui est un supra-nœud d'un nœud d'annotation associé à l'annotation particulière (a5).
